Europäisches Patentamt

European Patent Office

Office européen des brevets

(19)

(11) Veröffentlichungsnummer: **0 230 516**

**A2**

(12) **EUROPÄISCHE PATENTANMELDUNG**

(21) Anmeldenummer: 86113488.0

(51) Int. Cl.⁴: **F02D 9/02**

(22) Anmeldetag: 01.10.86

Die Bezeichnung der Erfindung wurde geändert
(Richtlinien für die Prüfung im EPA, A-III, 7.3).

(30) Priorität: 21.01.86 DE 3601622

(43) Veröffentlichungstag der Anmeldung:
05.08.87 Patentblatt 87/32

(84) Benannte Vertragsstaaten:
DE FR GB IT SE

(71) Anmelder: VDO Adolf Schindling AG
Gräfstrasse 103
D-6000 Frankfurt/Main(DE)

(72) Erfinder: Hickmann, Gerd
Frensburger Strasse 7
D-5242 Kirchen 4(DE)
Erfinder: Hannewald, Thomas
Feldmannstrasse 6
D-6103 Griesheim(DE)
Erfinder: Schneider, Erwin
Zum Morgengraben 32
D-6237 Liederbach(DE)
Erfinder: Wietschorke-Muhsold, Stephan
Ergerländerstrasse 6
D-6369 Usingen(DE)

(74) Vertreter: Klein, Thomas, Dipl.-Ing. (FH)
Sodener Strasse 9 Postfach 6140
D-6231 Schwalbach a. Ts.(DE)

(54) Betätigungsvorrichtung für das Leistungssteuerorgan einer Brennkraftmaschine.

(57) Bei einer Anordnung zum Eingriff in die Verbindung zwischen einem Bedienorgan (Gaspedal) und einem die Leistung einer Brennkraftmaschine bestimmenden Steuerorgan (Drosselklappe), wobei der die Verbindung bildende Seilzug unter Zugspannung steht, ist das Gaspedal mit einem ersten Hebel und die Drosselklappe mit einem zweiten Hebel verbunden. Eine Feder, deren Kraft im Sinne einer Aufrechterhaltung der Zugspannung wirkt, ist zwischen den Hebeln angeordnet. Der zweite Hebel ist über eine einseitig wirkende Anschlagkupplung mit einem Stellglied verbunden. Die Hebel sind vorzugsweise gleichachsig gelagert und so gestaltet, daß mit zunehmender Auslenkung der Feder die wirksame Hebellänge kleiner wird. Die Anordnung kann unter anderem für eine Schlupfregelung verwendet werden.

FIG. 1

## Anordnung für eine Brennkraftmaschine

Die Erfindung bezieht sich auf eine Anordnung für eine Brennkraftmaschine zum Eingriff in die Verbindung zwischen einem Bedienorgan und einem die Leistung bestimmenden Steuerorgan, wobei die die Verbindung bildende Einrichtung durch auf das Steuerorgan wirkende Federkräfte unter Zugspannung steht.

Für verschiedene Regelungen von Brennkraftmaschinen ist ein Eingriff in die Verbindung zwischen dem Bedienorgan, beispielsweise dem Gaspedal, und dem Steuerorgan, beispielsweise der Drosselklappe oder dem Stellhebel der Einspritzpumpe, erforderlich. Die Regeleinrichtungen können dabei an sich bekannte Einrichtungen zur Vermeidung von Schlupf oder Geschwindigkeitsbegrenzungsregler sein. Der Eingriff hat stets derart zu erfolgen, daß die Regelung nur eine Verringerung der vom Fahrer vorgegebenen Leistung ermöglicht.

Bei bekannten Anordnungen zum Eingriff in die Verbindung zwischen dem Bedienorgan und dem Steuerorgan einer Brennkraftmaschine sind hydraulische Stellglieder vorgesehen. Diese bedeuten jedoch insbesondere in Personenkraftwagen einen erheblichen Mehraufwand. Bei einer weiteren bekannten Anordnung ist in das Gestänge zwischen dem Gaspedal und der Drosselklappe eines Nutzkraftfahrzeugs ein Hebel eingeschaltet, dessen Drehpunkt bei Einsetzen der Geschwindigkeitsregelung verschoben wird. Dabei ist jedoch eine von der Stellung des Gaspedals abhängige Wirkung zwischen dem Stellglied und dem Steuerorgan vorhanden. Erwünscht ist jedoch eine eindeutige Zuordnung zwischen dem Stellglied und dem Steuerorgan, wenn der Eingriff erfolgt, das heißt, wenn nicht die vorangige Steuerung durch das Gaspedal vorgenommen wird.

Diese Aufgabe wird erfindungsgemäß dadurch gelöst, daß das Bedienorgan mit einem ersten Hebel und das Steuerorgan mit einem zweiten Hebel verbunden sind, daß eine Feder zwischen den Hebeln angeordnet ist, deren Kraft im Sinne einer Aufrechterhaltung der Zugspannung wirkt, und daß der zweite Hebel über eine einseitig wirkende Kupplung mit einem Stellglied verbunden ist. Die erfindungsgemäße Anordnung hat den Vorteil, daß ein Eingriff in die Verbindung zwischen dem Bedienorgan und dem Steuerorgan einer Brennkraftmaschine derart erfolgt, daß eine feste Zuordnung zwischen der Stellung des den Eingriff steuernden Stellgliedes und dem Steuerorgan vorhanden ist und daß ohne einen Eingriff eine direkte Betätigung des Steuerorgans mit Hilfe von an sich bekannten Verbindungsmitteln zwischen dem Bedienorgan und dem Steuerorgan (Seilzüge usw.) möglich ist.

Eine Weiterbildung der Erfindung besteht darin, daß der erste und der zweite Hebel und ein einen Teil der Anschlagkupplung umfassendes Abtriebselement des Stellgliedes gleichachsig gelagert sind. Damit ist eine einfache, kompakte und kostensparende Bauweise der erfindungsgemäßen Anordnung möglich.

Eine andere Weiterbildung der Erfindung besteht darin, daß die Feder zwischen den Hebeln derart angeordnet ist, daß mit zunehmender Auslenkung der Feder die wirksame Hebellänge kleiner wird. Eine vorteilhafte Ausgestaltung dieser Weiterbildung besteht darin, daß die Hebel in einer Ruhestellung, in welcher vom Stellglied kein Eingriff vorgenommen wird, einen Winkel von etwa 90°, vorzugsweise zwischen 75° und 110°, einschließen. Durch diese Weiterbildung sowie durch die besondere Ausgestaltung wird eine Reduzierung der maximal vom Stellglied aufzubringenden Kraft erreicht.

Zur Sicherstellung einer einwandfreien Übertragung der Bewegung vom Gaspedal auf die Drosselklappe, wenn kein Eingriff erfolgt, ist eine genügend große Zugkraft der zwischen den Hebeln angeordneten Feder erforderlich. Diese Zugkraft ist mindestens um die auftretende Reibung größer als die Rückstellkraft der Feder an der Drosselklappe bei Vollgasstellung. Wird nun aus der Vollgasstellung heraus mit Hilfe des Stellgliedes eine Abregelung vorgenommen, so erfolgt dieses gegen die mit zunehmender Auslenkung größer werdende Kraft der Feder, wobei die diese Bewegung an sich unterstützende Wirkung der Rückstellfeder der Drosselklappe mit zunehmender Abregelung kleiner wird. Durch die Weiterbildung der Erfindung wird erreicht, daß die Wirkung der Zugkraft der Feder auf die Hebel mit zunehmender Auslenkung geringer wird so daß das Stellglied für kleinere Kräfte bzw. Drehmomente ausgelegt sein kann.

Eine weitere Verringerung der erforderlichen Kraft bzw. des erforderlichen Drehmoments des Steuerorgans wird durch eine andere Weiterbildung der Erfindung erreicht. Diese ist dadurch gekennzeichnet, daß die Feder einer von der Stellung des Steuerorgans abhängigen Vorspannung unterworfen ist. Diese Weiterbildung nutzt den Zusammenhang zwischen Federweg und Federkraft der Rückstellfeder des Steuerorgans aus und sieht dementsprechend eine starke Federkraft zwischen den Hebeln nur bei einer entsprechend großen Auslenkung des Steuerorgans vor.

Eine vorteilhafte Ausgestaltung dieser Weiterbildung besteht darin, daß die Feder mit dem ersten Hebel über eine auf dem ersten Hebel angeordnete Umlenkrolle verbunden ist, um welche ein Zugseil gelegt ist, welches die Verbindung des einen Endes der Feder mit einem festen Punkt bewirkt. Eine weitere Ausgestaltung besteht darin, daß der Angriffspunkt der Feder an mindestens einem der Hebel in Abhängigkeit von der Stellung des Steuerorgans verschiebbar ist.

Die Erfindung läßt zahlreiche Ausführungsformen zu. Zwei davon sind schematisch in der Zeichnung an Hand mehrerer Figuren dargestellt und nachfolgend beschrieben. Es zeigt:

Fig. 1 schematisch die Kraftübertragung zwischen einem Gaspedal und der Drosselklappe eines Verbrennungsmotors mit einer erfindungsgemäßen Anordnung,

Fig. 2 ein Ausführungsbeispiel für eine erfindungsgemäße Anordnung,

Fig. 3 schematisch eine erfindungsgemäße Anordnung gemäß einer Weiterbildung der Erfindung und

Fig. 4 schematisch eine andere Ausgestaltung zur Erzielung einer von der Stellung des Steuerorgans abhängigen Vorspannung.

Gleiche Teile sind in den Figuren mit gleichen Bezugszeichen versehen.

Bei der Anordnung nach Anspruch 1 wird eine Brennkraftmaschine 1 mit Hilfe einer Drosselklappe 2, welche im Ansaugkanal 3 angeordnet ist, in ihrer Leistung gesteuert. Die Drosselklappe 2 ist um eine Drehachse 4 drehbar angeordnet und wird mit einem Hebel 5 betätigt. Am Ende des Hebels 5 befindet sich einerseits eine Rückstellfeder 6 und andererseits ein Seilzug 7, welcher zur Anordnung 8 führt.

Die Drosselklappe 2 wird mit Hilfe eines Gaspedals 9 eingestellt, welches um eine Drehachse 10 gelagert ist und über einen weiteren Seilzug 11 mit der Anordnung 8 verbunden ist.

Die Seilzüge 7, 11 sind in der Anordnung 8 jeweils mit einem Hebel 12, 13 verbunden, welche unabhängig voneinander drehbar bei 14 gelagert sind. Aus konstruktiven Gründen, unter anderem damit eine Führung des Seilzuges unabhängig von der Winkelstellung der Hebel 12, 13 möglich ist, sind die Hebel mit Seilführungssektoren 15, 16 versehen. Die Hebel 12, 13 sind durch eine Feder 17 miteinander verbunden, deren Kraft größer ist als die Rückstellkraft der Feder 6 und die im Bereich der Drosselklappenanordnung und des Seilzuges 7 auftretende Reibungskraft. Dadurch wird gewährleistet, daß sich ohne den im folgenden beschriebenen Eingriff die Bewegung des Gaspedals störungsfrei auf die Drosselklappe überträgt.

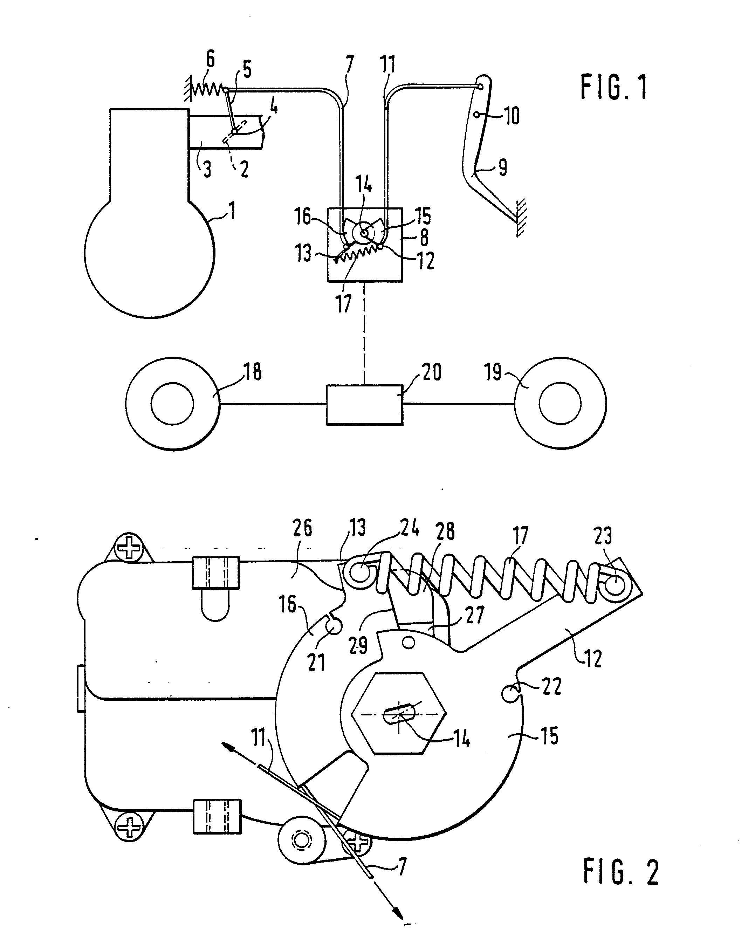

In Fig. 1 ist ferner eine Einrichtung zur Schlupfregelung angedeutet, welche jeweils von den Vorderrädern 18 und den Hinterrädern 19 ein Drehzahlsignal abnimmt und diese miteinander vergleicht. Weisen die jeweils angetriebenen Räder eine erhöhte Drehzahl auf, so wird von der Einrichtung 20 ein Signal an ein in Fig. 1 nicht dargestelltes Stellglied in der Anordnung 8 gegeben, welches eine Verminderung der Leistung der Brennkraftmaschine 1 verursacht. Dazu wird der Hebel 13 im Uhrzeigersinn gedreht, wodurch die Drosselklappe 2 in Richtung auf die Schließstellung bewegt wird. Dabei wird die Feder 17 gespannt, sofern nicht der Fahrer den Fuß vom Gaspedal 9 nimmt.

Bei der in Fig. 2 dargestellten Anordnung sind die Hebel 12 und 13 auf einer gemeinsamen Achse 14 gelagert. Die Teile 15 und 16 der Hebel 12 und 13 bilden Führungselemente für die Seilzüge 7 und 11 (Fig. 1). Die Seilzüge sind in Fig. 2 lediglich durch Pfeile 7, 11 angedeutet. Die sektorförmigen Führungsteile und 16 sind an ihrem Umfang mit einer Nut zur Aufnahme der Seilzuge 7 und 11 vorgesehen. Die zum Umfang hin offenen Bohrungen 21 und 22 dienen zur Aufnahme von das Ende der Seilzüge 7, 11 bildenden walzenförmigen Körpern.

Die Enden der Hebel 12 und 13 sind jeweils mit einem Bolzen 23 zur Aufnahme der Feder 17 versehen. Die Feder ist vorgespannt und versucht die Hebel derart gegeneinander zu verdrehen, daß der von ihnen eingeschlossene Winkel kleiner wird. Letzterer ist jedoch durch einen Stift 25 im Hebel 12, welcher einen Anschlag für den Hebel 13 bildet, begrenzt.

Die Kraft der Feder 17 ist derart groß, daß sie bei der normalen Bewegung des Gaspedals, das heißt ohne Eingriff in die Verbindung zwischen dem Gaspedal und der Drosselklappe, nicht ausgelenkt wird. Die Bewegung des Gaspedals und damit des Seilzuges 11 wird somit ohne Beeinflussung auf den Seilzug 7 und die Drosselklappe 4 übertragen.

Zur Vornahme des Eingriffs ist ein an sich bekanntes Stellglied 26 vorgesehen, das beispielsweise von einem Elektromotor und einem Untersetzungsgetriebe gebildet wird. Der Abtrieb des Untersetzungsgetriebes ist gleichachsig mit den Hebeln 12 und 13 angeordnet und besteht aus einem weiteren Hebel 27, welcher an seinem Ende 28 als Anschlag ausgebildet ist und mit der Fläche 29 des Hebels 13 eine Anschlagkupplung darstellt. Der Hebel 27 und damit das Stellglied 26 kann dementsprechend ein Drehmoment auf den Hebel 13 nur im Sinne einer Linksdrehung übertragen. Dieses entspricht einer Verminderung der Leistung der Brennkraftmaschine. Dabei wird die Feder 17 ausgelenkt und die Feder 6 an der Drosselklappenanordnung entlastet. Damit die vom Stellglied aufzubringende Kraft mit zunehmender Auslenkung nicht zu groß wird, sind die Hebel 12, 13 derart ausgebildet, daß mit zunehmender Auslenkung die wirksame Hebellänge aufgrund des größer werdenden Winkels zwischen den Hebeln kleiner wird.

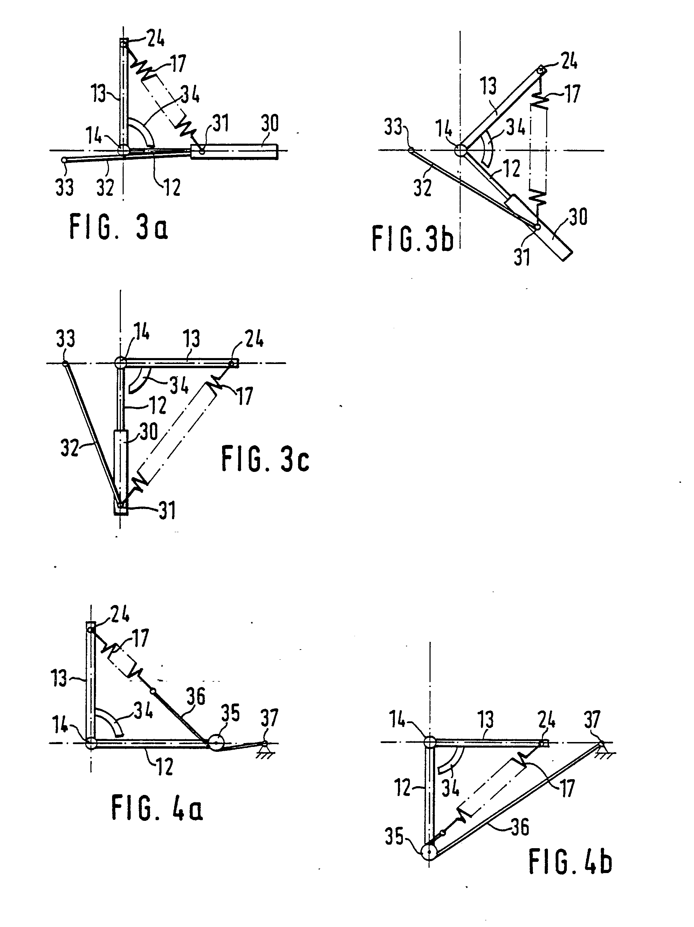

Zu einer weiteren Verringerung des vom Stellglied aufzubringenden Drehmoments tragen Anordnungen nach den Figuren 3 und 4 bei. Dabei wird erreicht, daß die Feder einer von der Stellung der Drosselklappe abhängigen Vorspannung unterworfen ist.

Bei der Anordnung nach Figur 3 wird die Länge des Hebels 12 durch eine Kulissenführung 30 mit zunehmender Gaspedalbewegung verlängert. Fig. 3a zeigt die Anordnung in der Leerlaufstellung. Dabei ist das eine Ende der Feder 17 an einem festen Punkt 24 des Hebels 13 angeschlossen, während das andere Ende der Feder 17 am Hebel 12 in einem beweglichen Punkt 31 angeordnet ist. Der Punkt 31 ist in radialer Richtung innerhalb des Hebels 12 beweglich, wozu eine entsprechende Führung 30 im Hebel 12 vorgesehen ist. Ein Führungshebel 32 ist um einen festen Punkt 33 drehbar und bestimmt mit seinem nicht festgelegten Ende die Stellung des Befestigungspunktes 31 für die Feder 17 im Hebel 12. Bei 34 ist schematisch ein Anschlag angedeutet, der verhindert, daß die Feder 17 die Hebel zu einem kleineren Winkel als 90° zusammenzieht.

Bei der in Fig. 3a gezeigten Leerlaufstellung weist der Befestigungspunkt 31 den kleinsten Radius zum Drehpunkt 14 auf. Die Feder 17 hat daher eine geringe Vorspannung, die jedoch genügt, um bei Bewegung des Gaspedals aus der Leerlaufstellung heraus die Kraft der Rückstellfeder 6 des Drosselklappenhebels zu überwinden.

Die Figuren 3b und 3c zeigen die gleiche Anordnung wie in Fig. 3a, jedoch in Fig. 3c in der Vollgasstellung und in Fig. 3b in einer Mittelstellung.

Gegenüber der in Fig. 3a gezeigten Stellung ist bei der Mittelstellung (Fig. 3b) der Befestigungspunkt 31 der Feder 17 etwas weiter vom Drehpunkt 14 entfernt, so daß die Feder 17 stärker gespannt ist. Bei Fig. 3c hat der Führungshebel 32 den Befestigungspunkt 31 an das äußere Ende der Führung 30 geschoben, wodurch die Feder am stärksten gespannt ist.

Bei der in Fig. 4 dargestellten Anordnung wird eine stellungsabhängige Vorspannung der Feder dadurch erreicht, daß auf dem Hebel 12 anstelle eines Befestigungspunktes eine Umlenkrolle 35 vorgesehen ist. Über die Umlenkrolle 35 läuft ein Seil 36, welches mit einem Ende an der Feder 17 und mit dem anderen Ende an einem festen Punkt 37 befestigt ist. Bei der in Fig. 4a gezeigten Leerlaufstellung ist die Entfernung zwischen der Umlenkrolle 35 und dem festen Punkt 37 klein, so daß der größere Teil des Seils 36 zwischen der Umlenkrolle 35 und der Feder 17 ist, so daß die Feder 17 nur geringfügig gespannt ist. Mit zunehmender Auslenkung wird die Feder stärker gespannt, so daß bei Vollgasstellung (Fig. 4b) die größte Vorspannung erreicht wird.

## Ansprüche

1. Anordnung zum Eingriff in die Verbindung zwischen einem Bedienorgan und einem die Leistung einer Brennkraftmaschine bestimmenden Steuerorgan, wobei die die Verbindung bildende Einrichtung durch auf das Steuerorgan wirkende Federkräfte unter Zugspannung steht, dadurch gekennzeichnet,

daß das Bedienorgan (9) mit einem ersten Hebel (12) und das Steuerorgan (2) mit einem zweiten Hebel (13) verbunden sind,

daß eine Feder (17) zwischen den Hebeln (12, 13) angeordnet ist, deren Kraft im Sinne einer Aufrechterhaltung der Zugspannung wirkt,

und daß der zweite Hebel (13) über eine einseitig wirkende Kupplung (28, 29) mit einem Stellglied (26) verbunden ist.

2. Anordnung nach Anspruch 1, dadurch gekennzeichnet, daß der erste und der zweite Hebel (12, 13) und ein einen Teil der Kupplung umfassendes Abtriebselement (25) des Stellgliedes (26) gleich achsig gelagert sind.

3. Anordnung nach Anspruch 1, dadurch gekennzeichnet, daß die Feder (17) zwischen den Hebeln (12, 13) derart angeordnet ist, daß mit zunehmender Auslenkung der Feder (17) die wirksame Hebellänge kleiner wird.

4. Anordnung nach Anspruch 3, dadurch gekennzeichnet, daß die Hebel (12, 13) in einer Ruhestellung, in welcher vom Stellglied (26) kein Eingriff vorgenommen wird, einen Winkel von etwa 90°, vorzugsweise zwischen 75° und 110°, einschließen.

5. Anordnung nach einem der vorhergehenden Ansprüche, dadurch gekennzeichnet, daß die Feder (17) einer von der Stellung des Steuerorgans (2) abhängigen Vorspannung unterworfen ist.

6. Anordnung nach Anspruch 5, dadurch gekennzeichnet, daß die Feder (17) mit dem ersten Hebel (12) über eine auf dem ersten Hebel angeordnete Umlenkrolle (34) verbunden ist, um welche ein Zugseil (35) gelegt ist, welches die Verbindung des einen Endes der Feder (17) mit einem festen Punkt bewirkt (36).

7. Anordnung nach Anspruch 5, dadurch gekennzeichnet, daß der Angriffspunkt (31) der Feder (17) an mindestens einem der Hebel (12) in Abhängigkeit von der Stellung des Steuerorgans (2) verschiebbar ist.

8. Anordnung nach einem der vorangehenden Ansprüche, dadurch gekennzeichnet, daß die Hebel jeweils einen Sektor (15, 16) einer Kreisscheibe umfassen, an dessen Umfangsfläche eine Nut zur Führung eines Zug seils angeordnet ist.

FIG. 1

FIG. 2

FIG. 3a

FIG. 3b

FIG. 3c

FIG. 4a

FIG. 4b